# EUROPÄISCHE PATENTSCHRIFT

(11) **EP 0 364 041 B1**
(45) Veröffentlichungstag und Bekanntmachung des Hinweises auf die Patenterteilung: **11.01.1995**
(21) Anmeldenummer: 89202536.2
(22) Anmeldetag: 09.10.1989
(51) Int. Cl.: G11B 27/30

(54) **System zum Aufzeichnen und Auswerten von Markiersignalen**
Recording and evaluating system for cue signals
Système d'enregistrement et d'utilisation des repères

(30) Priorität: 13.10.1988 AT 2543/88
(43) Veröffentlichungstag der Anmeldung: 18.04.1990
(73) Patentinhaber: Philips Electronics N.V., 5621 BA Eindhoven (NL)
(72) Erfinder: Schranz, Hans, NL-5656 AA Eindhoven (NL)
(74) Vertreter: van der Kruk, Willem Leonardus

(56) Entgegenhaltungen:
- EP-A- 0 110 483
- DE-A- 3 726 367
- US-A- 3 869 720
- US-A- 3 882 545
- US-A- 4 007 491

## Beschreibung

Die Erfindung bezieht sich auf ein System zum Aufzeichnen und Auswerten von auf einem Aufzeichnungsträger speicherbaren und von demselben abtastbaren, voneinander unterscheidbaren Markiersignalen mit einer Aufzeichnungseinrichtung zum Aufzeichnen der zu speichernden Markiersignale und mit einer Auswerteeinrichtung zum Auswerten der abgetasteten Markiersignale, wobei die Aufzeichnungseinrichtung eine Generatoreinrichtung zum Erzeugen der zu speichernden Markiersignale und die Auswerteeinrichtung eine Detektoreinrichtung zum Detektieren der abgetasteten Markiersignale aufweist und die Generatoreinrichtung eine erste Generatorstufe zum Erzeugen eines ersten Signales, das eine erste Frequenz aufweist, eine zweite Generatorstufe zum Erzeugen eines zweiten Signales, das eine zweite Frequenz aufweist wobei die erste und zweite Frequenz unterschiedlich sind, eine erste Zeitsteuerstufe, mit der die Auftrittszeitspanne für das erste Signal festlegbar ist, und eine zweite Zeitsteuerstufe, mit der die Auftrittszeitspanne für das zweite Signal festlegbar ist, enthält, und zum Erzeugen eines nur aus dem ersten Signal bestehenden Markiersignales einer ersten Art die erste Zeitsteuerstufe für die Auftrittszeitspanne des ersten Signales einen vorgegebenen Wert T und zugleich die zweite Zeitsteuerstufe für die Auftrittszeitspanne des zweiten Signales den Wert Null festlegt und zum Erzeugen eines aus dem ersten Signal und dem zweiten Signal bestehenden Markiersignales einer zweiten Art die erste Zeitsteuerstufe für die Auftrittszeitspanne des ersten Signales und zugleich die zweite Zeitsteuerstufe für die Auftrittszeitspanne des zweiten Signales je den Wert T festlegen, und die Detektoreinrichtung eine erste Detektorstufe zum Detektieren eines vom Aufzeichnungsträger abgetasteten, dem ersten Signal entsprechenden Signales und eine zweite Detektorstufe zum Detektieren eines vom Aufzeichnungsträger abgetasteten, dem zweiten Signal entsprechenden Signales, die beide bei Auftreten des betreffenden entsprechenden Signales je ein Ausgangssignal abgeben, und eine den beiden Detektorstufen nachfolgende Logikstufe enthält, die in Abhängigkeit von den Ausgangssignalen der beiden Detektorstufen den vom Aufzeichnungsträger abgetasteten Markiersignalen entsprechende Detektionssignale erzeugt und abgibt.

Ein solches System ist in einem von der Anmelderin hergestellten und vertriebenen Diktiersystem verwendet, das unter der Bezeichnung Mini-Kassetten-Diktiersystem bekannt ist, das Tischdiktiergeräte und tragbare Taschendiktiergeräte, mit denen sowohl das Aufzeichnen als auch das Wiedergeben von Diktaten möglich ist, und Auswertegeräte, die sich nur zum Wiedergeben von Diktaten eignen, umfaßt. Bei diesem bekannten Diktiersystem sind mit dem darin verwendeten eingangs angeführten System zum Aufzeichnen und Auswerten von Markiersignalen Markiersignale zweier unterschiedlicher Arten auf dem als Magnetband ausgebildeten Aufzeichnungsträger speicherbar, um bestimmte Stellen von Diktaten durch Aufzeichnen der Markiersignale kennzeichnen und durch Auswerten der abgetasteten Markiersignale wieder auffinden zu können. Dabei ist mit einem Markiersignal einer ersten Art, das aus einem ersten sinusförmigen Signal mit einer Frequenz von 40 Hz besteht, das beispielsweise während einer Auftrittszeitspanne von 650 msec erzeugt und bei einer vorgegebenen normalen Fortbewegungsgeschwindigkeit des Magnetbandes auf demselben aufgezeichnet wird, jeweils das Ende eines Diktates kennzeichenbar. Mit einem Markiersignal einer zweiten Art, das aus dem ersten sinusförmigen Signal mit der Frequenz von 40 Hz und einem zweiten sinusförmigen Signal mit einer Frequenz von 1500 Hz besteht, die zugleich während derselben Zeitspanne von 650 msec erzeugt und ebenfalls bei der normalen Fortbewegungsgeschwindigkeit des Magnetbandes auf demselben aufgezeichnet werden, sind Diktatstellen kennzeichenbar, zu denen der Diktierende spezielle Instruktionen, Korrekturanweisungen oder dergleichen gegeben hat beziehungsweise geben will, die bei der Diktatauswertung durch eine Schreibkraft von dieser zu berücksichtigen sind. Wie aus vorstehendem hervorgeht, unterscheiden sich bei dem bekannten System die Markiersignale der ersten und zweiten Art dadurch voneinander, daß ein Markiersignal der ersten Art nur aus einem Signal, das eine vorgegebene Frequenz und eine vorgegebene Auftrittszeitspanne aufweist, und ein Markiersignal der zweiten Art aus zwei Signalen besteht, von denen das eine Signal dieselbe Frequenz wie das erste Markiersignal und das andere Signal eine dazu unterschiedliche Frequenz aufweist und die beide dieselbe Auftrittszeitspanne wie das erste Markiersignal aufweisen.

Die Auswertung der vom Magnetband abgetasteten Markiersignale der ersten und zweiten Art erfolgt bei dem bekannten System bei einer gegenüber dem Aufzeichnen der Markiersignale höheren Fortbewegungsgeschwindigkeit des Magnetbandes, wobei diese Fortbewegungsgeschwindigkeit beispielsweise um einen Faktor 20 höher ist als die Fortbewegungsgeschwindigkeit beim Aufzeichnen der Markiersignale. Durch diese höhere Fortbewegungsgeschwindigkeit bei der Auswertung der abgetasteten Markiersignale kommt es zu einer Transponierung der Frequenzen der Signale, aus denen die Markiersignale bestehen, um einen Faktor 20, so daß bei der Auswertung eines Markiersignales der ersten Art ein dem ersten sinusförmigen Signal mit einer Frequenz von 40 Hz entsprechendes Signal mit einer Frequenz von 800 Hz und bei der Auswertung eines Markiersignales der zweiten Art ein dem ersten sinusförmigen Signal mit einer Frequenz von 40 Hz entsprechendes Signal mit einer Frequenz von 800 Hz und ein dem zweiten sinusförmigen Signal mit einer Frequenz von 1500 Hz entsprechendes Signal mit einer Frequenz von 30 kHz von dem Magnetband abgetastet wird. Aufgrund dieses Sachverhaltes weist die Auswerteeinrichtung für die vom Magnetband abgetasteten Markiersignale der ersten und zweiten Art bei dem bekannten System eine Detektoreinrichtung auf, die eine erste Detektorstufe zum Detektieren eines Signales mit einer Frequenz von 800 Hz und eine zweite Detektorstufe zum Detektieren eines Signales mit einer Frequenz von 30 kHz enthält, die beide bei Auftreten des entsprechenden Signales je ein Ausgangssignal abgeben, die einer den beiden Detektorstufen nachfolgenden Logikstufe zugeführt werden. Wenn nur die erste Detektorstufe ein solches Ausgangssignal abgibt, erzeugt die Logikstufe ein einem Markiersignal der ersten Art entsprechendes Detektionssignal. Wenn beide Detektorstufen ein solches Ausgangssignal abgeben, erzeugt die Logikstufe ein einem Markiersignal der zweiten Art entsprechendes Detektionssignal. Diese Detektionssignale können einer optischen oder akustischen Anzeigeeinrichtung zugeführt werden. Sie können aber auch einer Abschalteinrichtung zum Abschalten der Antriebseinrichtung für das Magnetband zugeführt werden, wobei dann durch Abschalten der Antriebseinrichtung für das Magnetband die Fortbewegung des Magnetbandes unterbrochen wird, wenn ein Markiersignal detektiert wird.

Bei dem bekannten System zum Aufzeichnen und Auswerten von Markiersignalen ist es, wie vorstehend beschrieben, nur möglich, voneinander unterscheidbare Markiersignale einer ersten und einer zweiten Art aufzuzeichnen und auszuwerten. Im Zuge der Verwendung der Geräte des bekannten Diktiersystems hat sich dies als nachteilige Einschränkung herausgestellt, da sich ein Bedarf an weiteren Markierungsmöglichkeiten mit Markiersignalen ergeben hat, die aber bei dem bekannten System zum Aufzeichnen und Auswerten von Markiersignalen nicht möglich sind.

Die Erfindung hat sich daher zur Aufgabe gestellt, diesen Bedarf zufriedenzustellen und ein System der eingangs angeführten Gattung erfindungsgemäß so auszubilden, daß mit dem erfindungsgemäßen System zumindest ein Markiersignal einer dritten Art erzeugbar und auswertbar ist, wobei zwar nicht die Art eines solchen Markiersignales der dritten Art, wohl aber das Vorhandensein desselben auch mit einer Auswerteeinrichtung des bekannten bestehenden System festgestellt werden kann, um hinsichtlich der Feststellung des Vorhandenseins von Markiersignalen Kompatibilität zwischen dem bestehenden System und dem erfindungsgemäßen System zu gewährleisten. Zur Realisierung dieser gestellten Aufgabe ist gemäß der Erfindung vorgesehen, daß zum Erzeugen mindestens eines aus dem ersten Signal und dem zweiten Signal bestehenden Markiersignales einer dritten Art mindestens eine der beiden Zeitsteuerstufen die mit ihr festlegbare Auftrittszeitspanne für das betreffende Signal auf mindestens einen vom Wert T unterschiedlichen Wert festlegt und daß die Detektoreinrichtung zusätzlich zu den beiden Detektorstufen zum Detektieren der beiden vom Aufzeichnungsträger abgetasteten, dem ersten Signal und dem zweiten Signal entsprechenden Signale für mindestens eines dieser beiden entsprechenden Signale, das einem der beiden Signale entspricht, für das mit einer der beiden Zeitsteuerstufen mindestens eine vom Wert T unterschiedliche Auftrittszeitspanne festlegbar ist, eine Zeitmeßstufe zum Messen der Auftrittszeit spanne dieses mindestens einen entsprechenden Signales enthält, die je nach gemessener Auftrittszeitspanne unterschiedliche Meßwerte der Logikstufe zum Erzeugen der den vom Aufzeichnungsträger abgetasteten Markiersignalen entsprechenden Detektionssignale zuführt. Auf diese Weise ist erreicht, daß mindestens ein neues Markiersignal einer dritten Art zur Verfügung steht, das aus zwei Signalen mit unterschiedlichen Frequenzen besteht, aus denen auch ein bekanntes Markiersignal der zweiten Art besteht. Zur Unterscheidung eines neuen Markiersignales der dritten Art von einem bekannten Markiersignal der zweiten Art ist die Auftrittszeitspanne zumindest eines Signales in einem Markiersignal der dritten Art gegenüber der Auftrittszeitspanne dieses Signales in einem Markiersignal der zweiten Art unterschiedlich festgelegt, so daß durch Detektion dieser unterschiedlichen Auftrittszeitspanne ein Markiersignal der dritten Art eindeutig von einem Markiersignal der zweiten Art unterscheidbar ist. Da ein solches neues Markiersignal der dritten Art aus denselben beiden Signalen besteht wie ein bekanntes Markiersignal der zweiten Art, kann ein Markiersignal der dritten Art auch mit einer zum Auswerten eines Markiersignales der zweiten Art vorgesehenen Auswerteeinrichtung des bestehenden bekannten Systems festgestellt werden, wobei zwar nicht die Art eines neuen Markiersignales der dritten Art von der Art eines bekannten Markiersignales der zweiten Art unterschieden werden kann, aber sehr wohl das Vorhandensein eines solchen Markiersignales der dritten Art an sich festgestellt werden kann. Auf diese Weise ist somit hinsichtlich der Feststellung des Vorhandenseins von Markiersignalen Kompatibilität zwischen dem bestehenden bekannten System und dem erfindungsgemäßen System erreicht.

An dieser Stelle sei erwähnt, daß es beispielsweise aus der DE-OS 20 29 090 an sich bekannt ist, Markiersignale mit unterschiedlich langer Auftrittszeitspanne zu verwenden. Gemäß der DE-OS 20 29 090 bestehen alle diese bekannten Markiersignale aber nur aus einem einzigen Signal, das eine vorgegebene Frequenz aufweist, wogegen erfindungsgemäß die Markiersignale aus zwei Signalen mit unterschiedlichen Frequenzen und unterschiedlichen Auftrittszeitspannen bestehen, was den Vorteil mit sich bringt, daß die Auswertung dieser Markiersignale auf einfache Weise unabhängig von der Antriebs- bzw. Fortbewegungsgeschwindigkeit des Aufzeichnungsträgers beim Auswerten erfolgen kann.

Zum Erzeugen mindestens eines Markiersignales der dritten Art können sowohl die erste Zeitsteuerstufe als auch die zweite Zeitsteuerstufe für die Auftrittszeitspannen des betreffenden Signales je mindestens einen von den Werten Null und T unterschiedlichen Wert festlegen. Als vorteilhaft hat sich aber erwiesen, wenn zum Erzeugen mindestens eines Markiersignales der dritten Art die erste Zeitsteuerstufe für die Auftrittszeitspanne des ersten Signales den Wert T und zugleich die zweite Zeitsteuerstufe für die Auftrittszeitspanne des zweiten Signales mindestens einen vom Wert T unterschiedlichen Wert festlegt. Dies ist im Hinblick auf eine einfache Erzeugung und Detektion aller Markiersignale vorteilhaft, weil die Auftrittszeitspanne des ersten Signales, das die erste Frequenz aufweist, in allen Markiersignalen der drei unterschiedlichen Arten gleich lang ist. Hiedurch braucht bei der Auswertung aller Markiersignale der drei unterschiedlichen Arten nur das Vorhandensein des dem ersten Signal entsprechenden Signales an sich mit der ersten Detektorstufe detektiert werden, ohne daß die Auftrittszeitspanne des dem ersten Signal entsprechenden Signales ermittelt werden muß.

Als vorteilhaft hat sich dabei weiters erwiesen, wenn zum Erzeugen eines Markiersignales der dritten Art die erste Zeitsteuerstufe für die Auftrittszeitspanne des ersten Signales den Wert T und zugleich die zweite Zeitsteuerstufe für die Auftrittszeitspanne des zweiten Signales den Wert T/2 festlegt. Ein solches Markiersignal der dritten Art ist besonders sicher und leicht von den bekannten Markiersignalen der ersten und zweiten Art unterscheidbar, was im Hinblick auf eine einwandfreie Detektion der Markiersignale vorteilhaft ist.

Weiters hat sich als vorteilhaft erwiesen, wenn zum Erzeugen mindestens eines Markiersignales der dritten Art die beiden Zeitsteuerstufen für die Auftrittszeitspannen der beiden Signale denselben Startzeitpunkt festlegen. Dies ist im Hinblick auf eine möglichst einfache zeitliche Steuerung der Zeitsteuerstufen vorteilhaft.

Die Zeitsteuerstufen können beispielsweise als Torschaltungen ausgebildet sein, die von den Generatorstufen dauernd erzeugte erste und zweite Signale für die jeweilige Auftrittszeitspanne durchlassen. Als vorteilhaft hat sich aber erwiesen, wenn die beiden Zeitsteuerstufen die beiden Generatorstufen zum Erzeugen des ersten Signales und des zweiten Signales aktivieren. Dies ist im Falle einer Ausbildung der Generatorstufen mit diskreten Bauteilen im Hinblick auf einen möglichst geringen Energieverbrauch und im Falle einer Ausbildung der Generatorstufen mit einem Mikroprozessor im Hinblick auf einen möglichst einfachen Programmablauf und folglich einen möglichst geringen Speicherplatzbedarf vorteilhaft.

Weiters hat sich bei einem erfindungsgemäßen System mit einem zum Auslösen des Erzeugens und Aufzeichnens eines Markiersignales der ersten Art vorgesehenen ersten Bedienungsorgan und mit einem zum Auslösen des Erzeugens und Aufzeichnens eines Markiersignales der zweiten Art vorgesehenen zweiten Bedienungsorgan, die von dem eingangs erwähnten bestehenden Mini-Kassetten-Diktiersystem her an sich bekannt sind, als vorteilhaft erwiesen, wenn das Erzeugen und Aufzeichnen mindestens eines Markiersignales der dritten Art durch innerhalb einer vorgegebenen Zeitdauer mindestens zweifach aufeinanderfolgendes Betätigen eines der beiden Bedienungsorgane auslösbar ist. Auf diese Weise erübrigt sich das Vorsehen von mindestens einem separaten Bedienungsorgan zum Auslösen des Erzeugens und Aufzeichnens von mindestens einem Markiersignal der dritten Art, was im Hinblick auf eine möglichst einfache Geräteausbildung mit möglichst wenigen Bedienungsorganen vorteilhaft ist.

Weiters hat sich bei einem erfindungsgemäßen System als vorteilhaft erwiesen, wenn die Detektoreinrichtung für das vom Aufzeichnungsträger abgetastete, dem ersten Signal entsprechende Signal eine erste Zeitmeßstufe zum Messen der Auftrittszeitspanne dieses entsprechenden Signales und für das vom Aufzeichnungsträger abgetastete, dem zweiten Signal entsprechende Signal eine zweite Zeitmeßstufe zum Messen der Auftrittszeitspanne dieses entsprechenden Signales enthält, die beide die von ihnen ermittelten Meßwerte der Logikstufe zuführen, und die Logikstufe in Abhängigkeit vom Verhältnis der ihr zugeführten Meßwerte die den abgetasteten Markiersignalen entsprechenden Detektionssignale erzeugt. Hiedurch ist erreicht, daß die Auswertung der abgetasteten Markiersignale unabhängig von der Antriebs- bzw. Fortbewegungsgeschwindigkeit des Aufzeichnungsträgers beim Abtasten der Markiersignale ist.

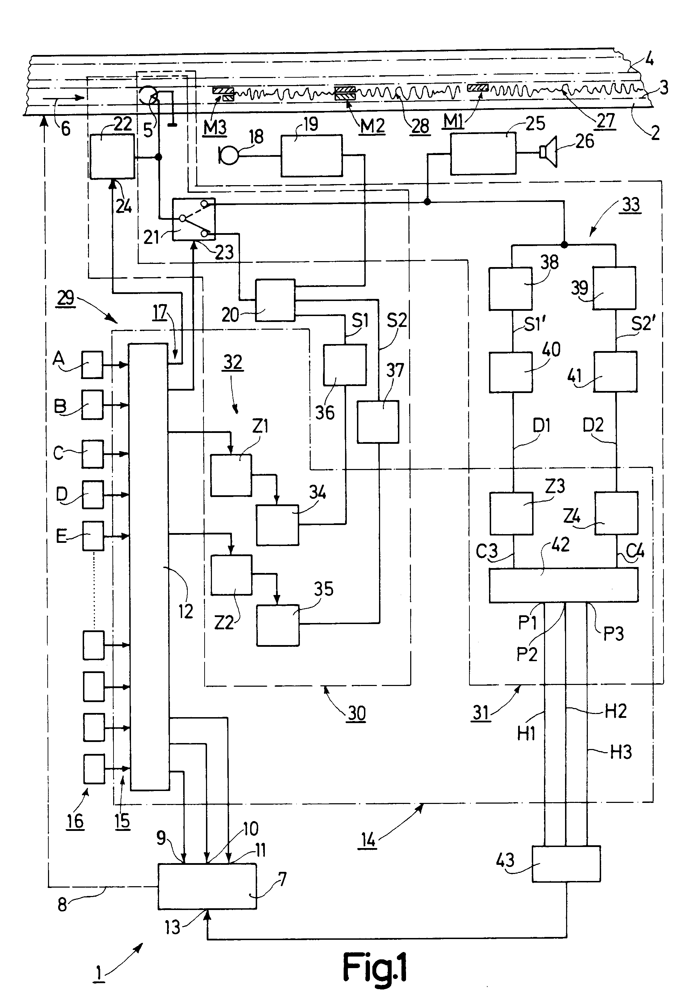

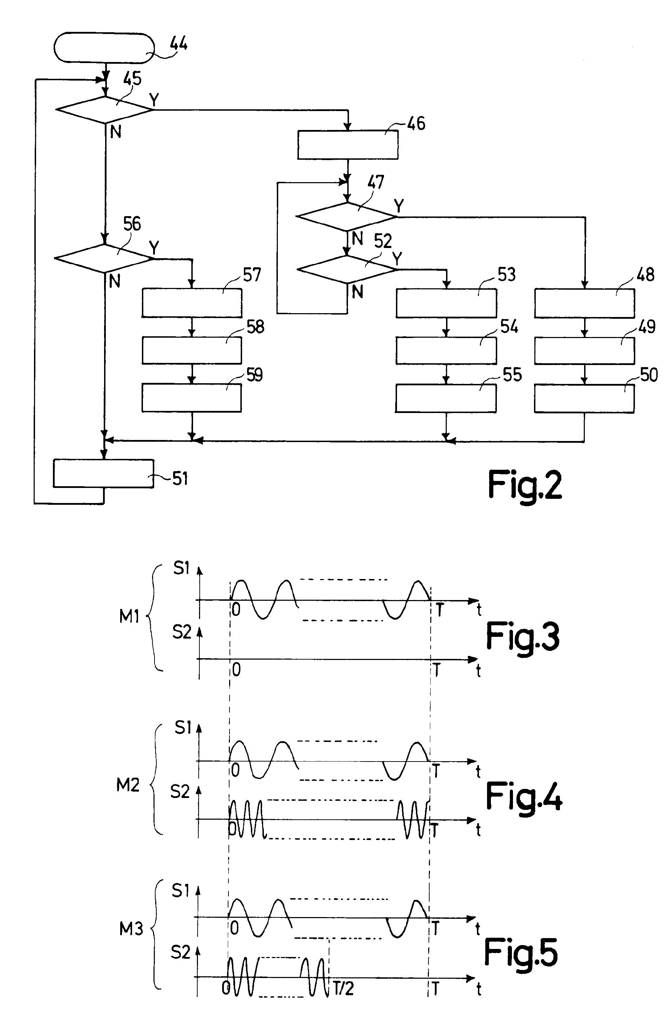

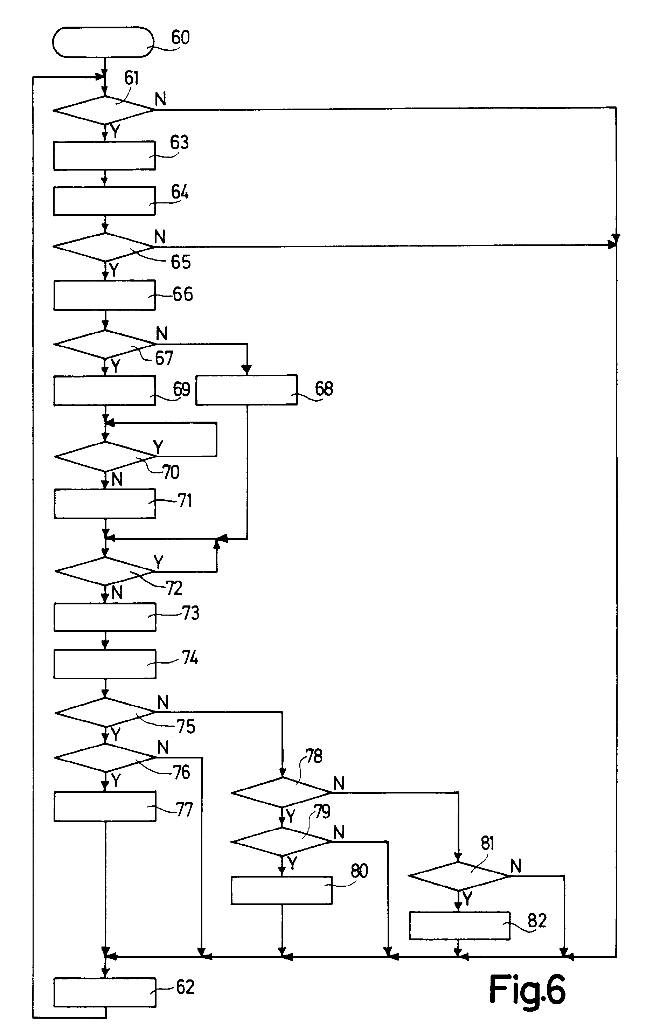

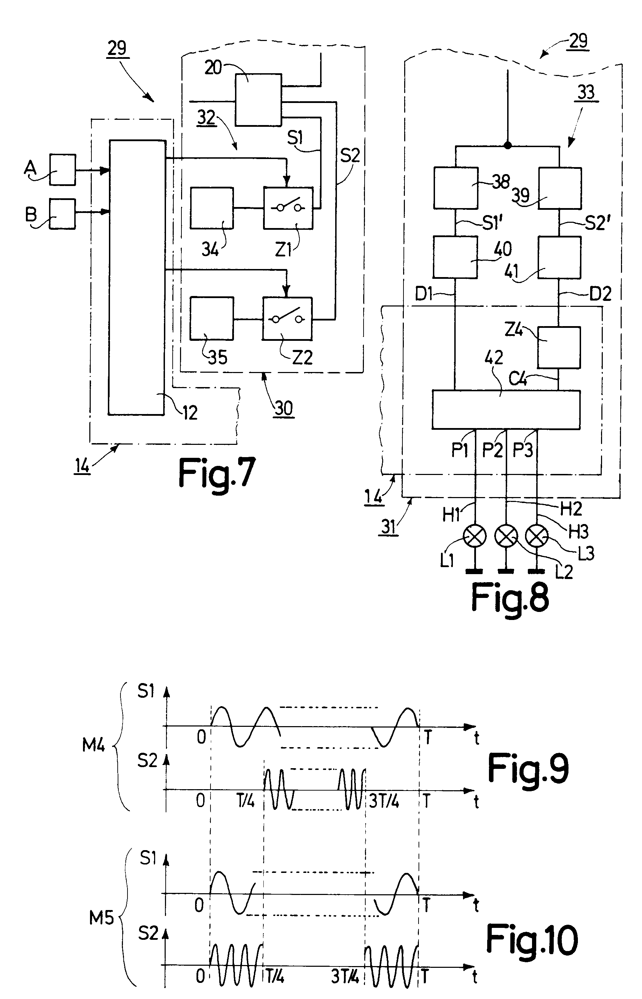

Die Erfindung wird im folgenden anhand von in den Zeichnungen dargestellten Ausführungsbeispielen, auf die dieselbe jedoch nicht beschränkt sein soll, näher beschrieben. Die Fig.1 zeigt schematisch ein Diktiergerät zum Aufzeichnen und Wiedergeben von Sprachsignalen auf einem als Magnetband ausgebildeten Aufzeichnungsträger, das ein System zum Aufzeichnen und Auswerten von Markiersignalen enthält, mit dem Markiersignale dreier unterschiedlicher Arten aufzeichenbar und auswertbar sind. Die Fig.2 zeigt ein Flußdiagramm eines Programmablaufes zum Erzeugen dieser Markiersignale dreier unterschiedlicher Arten bei dem Gerät gemäß Fig.1. Die Fig.3 zeigt die Signalausbildung eines gemäß dem Programmablauf nach Fig.2 erzeugten Markiersignales einer ersten Art. Die Fig.4 zeigt die Signalausbildung eines gemäß dem Programmablauf nach Fig.2 erzeugten Markiersignales einer zweiten Art. Die Fig.5 zeigt die Signalausbildung eines gemäß dem Programmablauf nach Fig.2 erzeugten Markiersignales einer dritten Art. Die Fig.6 zeigt ein Flußdiagramm eines Programmablaufes zum Auswerten von Markiersignalen der drei unterschiedlichen Arten gemäß den Figuren 3, 4 und 5. Die Fig.7 zeigt in Abwandlung des Ausführungsbeispieles gemäß Fig.1 einen Teil einer Aufzeichnungseinrichtung für Markiersignale eines zweiten erfindungsgemäßen Systems zum Aufzeichnen und Auswerten von Markiersignalen. Die Fig.8 zeigt in Abwandlung des Ausführungsbeispieles gemäß Fig.1 einen Teil einer Auswerteeinrichtung für Markiersignale eines dritten erfindungsgemäßen Systems zum Aufzeichnen und Auswerten von Markiersignalen. Die Fig.9 zeigt ein weiteres Markiersignal der dritten Art, das mit einem erfindungsgemäßen System zum Aufzeichnen und Auswerten von Markiersignalen erzeugbar ist. Die Fig.10 zeigt noch ein weiteres Markiersignal der dritten Art, das mit einem erfindungsgemäßen System zum Aufzeichnen und Auswerten von Markiersignalen erzeugbar ist.

Die Fig.1 zeigt schematisch die erfindungswesentlichen Teile eines Tischdiktiergerätes 1, mit dem vorzugsweise Sprachsignale auf einem in einer nicht dargestellten Kassette untergebrachten Magnetband 2 aufgezeichnet und von dem Magnetband wieder abgetastet und wiedergegeben werden können. In Fig.1 ist ein Teil des Magnetbandes 2 dargestellt. Auf dem Magnetband 2 sind zwei mit strichpunktierten Linien angedeutete Spuren 3 und 4 vorgesehen, die bei entgegengesetzten Fortbewegungsrichtungen des Magnetbandes zum Aufzeichnen und Wiedergeben von Signalen mit Hilfe eines Aufzeichnungs/Wiedergabe-Magnetkopfes 5 abtastbar sind.

Zum Abtasten der Spur 3 wird das Magnetband 2 in einer mit einem Pfeil 6 angegebenen Richtung fortbewegt. Dieses Fortbewegen des Magnetbandes 2 erfolgt mit Hilfe einer schematisch angedeuteten motorischen Bandantriebseinrichtung 7, die über Wickeldorne, die mit Wickelkernen in einer Kassette gekoppelt sind, das Magnetband 2 antreibt, wie dies in Fig.1 symbolisch mit einer strichlierten Linie 8 angedeutet ist. Die Bandantriebseinrichtung 7 weist drei Steuereingänge 9, 10 und 11 auf, die von einer Steuerstufe 12 ansteuerbar sind, um die Bandantriebseinrichtung 7 in drei unterschiedliche Betriebsweisen zu schalten, in denen das Band mit einfacher normaler Fortbewegungsgeschwindigkeit in Richtung des Pfeiles 6, mit zwanzigfacher Fortbewegungsgeschwindigkeit in Richtung des Pfeiles 6 bzw. mit zwanzigfacher Fortbewegungsgeschwindigkeit entgegen der Richtung des Pfeiles 6 angetrieben wird. Weiters weist die Bandantriebseinrichtung 7 einen Steuereingang 13 auf, über den dieselbe abgeschaltet werden kann, um das Antreiben des Magnetbandes 2 zu beenden.

Die Steuerstufe 12 ist bei vorliegendem Gerät Teil eines Mikroprozessors 14, der in Fig.1 mit einer strichpunktierten Linie schematisch angedeutet ist. Mit der Steuerstufe 12 ist einerseits über Abfrageeingänge 15 derselben feststellbar, ob und welche Taste eines Tastensatzes 16 zum Einschalten von Betriebsarten bzw. Betriebsfunktionen des Gerätes betätigt wurde. Andererseits gibt die Steuerstufe 12 über Steuerausgänge 17 derselben Steuersignale zur Steuerung von Geräteteilen, wie etwa der Bandantriebseinrichtung 7, ab.

Mit dem Gerät 1 ist ein an dasselbe ansteckbares Mikrofon 18 verbunden. Die Ausgangssignale des Mikrofons 18 werden einer Aufzeichnungsverstärkerschaltung 19 zugeführt, deren Ausgangssignale einer Summierstufe 20 zugeleitet werden. Die Ausgangssignale der Summierstufe 20 werden einem Aufzeichnungs/Wiedergabe-Umschalter 21 zugeführt, der in der in Fig.1 mit einer vollen Linie dargestellten Schaltstellung, die er zum Aufzeichnen von Signalen einnimmt, die ihm zugeführten Signale dem Magnetkopf 5 zuleitet. Auf diese Weise sind Sprachsignale, die gesprochenen Diktaten entsprechen, auf dem Magnetband 2 aufzeichenbar. Beim Aufzeichnen von Signalen wird ein Oszillator 22 aktiviert, der ein Vormagnetisierungs-bzw. Löschsignal beim Aufzeichnen von Signalen dem Magnetkopf 5 zuführt. Der Aufzeichnungs/Wiedergabe-Umschalter 21 und der Oszillator 22 weisen je einen Steuereingang 23 bzw. 24 auf, über die die beiden von der Steuerstufe 12 steuerbar sind.

Zum Wiedergeben von Sprachsignalen wird der Umschalter 21 von der Steuerstufe 12 in seine in Fig.1 mit einer strichlierten Linie dargestellte Schaltstellung umgeschaltet. Dadurch werden mit dem Magnetkopf 5 vom Magnetband 2 abgetastete Sprachsignale einer Wiedergabeverstärkerschaltung 25 zugeführt, deren Ausgangssignale zur akustischen Wiedergabe einem Lautsprecher 26 zugeleitet werden. Anstelle des Lautsprechers können die Ausgangssignale der Wiedergabeverstärkerschaltung 25 auch einem Kopfhörer zugeleitet werden, über den eine Schreibkraft die gespeicherten Diktate zum Niederschreiben abhören kann.

In Fig.1 ist schematisch dargestellt, daß auf dem Magnetband 2 ein erstes Diktat 27 und ein zweites Diktat 28 gespeichert sind. Bei einem solchen Diktiergerät hat es sich als sehr nützlich und praktisch erwiesen, bestimmte Stellen der gespeicherten Diktate bzw. die Diktate selbst erwünschtenfalls mit Markiersignalen markieren zu können. In Fig.1 sind solche Markiersignale symbolisch angedeutet und mit den Bezugszeichen M1, M2 und M3 bezeichnet. Wie aus der nachfolgenden Beschreibung noch genau hervorgeht, sind bei vorliegendem Gerät Markiersignale dreier unterschiedlicher Arten auf dem Magnetband 2 speicherbar und danach wieder auswertbar.

Das Gerät 1 weist hiefür ein System 29 zum Aufzeichnen und Auswerten von auf dem Magnetband aufzeichenbaren und speicherbaren und von dem Magnetband abtastbaren, voneinander unterscheidbaren Markiersignalen M1, M2 und M3 auf. Zum Auslösen des Erzeugens und Aufzeichnens eines Markiersignales M1 einer ersten Art weist das Gerät 1 eine Taste A auf. Zum Auslösen des Erzeugens und Aufzeichnens eines Markiersignales M2 einer zweiten Art weist das Gerät 1 eine Taste B auf. Das Auslösen des Erzeugens und Aufzeichnens eines Markiersignales M3 einer dritten Art ist, wie nachfolgend noch näher beschrieben ist, durch innerhalb einer vorgegebenen Zeitdauer zweifach aufeinanderfolgendes Betätigen der Taste A auslösbar. Auf diese Weise ist erreicht, daß zum Auslösen des Erzeugens und Aufzeichnens eines Markiersignales der dritten Art keine separate Taste erforderlich ist. Zum Auslösen des Auswertens von Markiersignalen M1 der ersten Art ist eine Taste C, zum Auslösen des Auswertens von Markiersignalen M2 der zweiten Art eine Taste D und zum Auslösen des Auswertens von Markiersignalen M3 der dritten Art eine Taste E vorgesehen. Der Tastensatz 16 weist noch weitere Tasten auf, die beispielsweise zum Einschalten der Betriebsart "Aufzeichnen", der Betriebsart "Wiedergeben", der Betriebsart "Schneller Vorlauf" und der Betriebsart "Schneller Rücklauf" und dergleichen dienen.

Das System 29 zum Aufzeichnen und Auswerten von Markiersignalen weist eine in Fig.1 schematisch mit einer strichlierten Linie umrandete Aufzeichnungseinrichtung 30 zum Aufzeichnen der zu speichernden Markiersignale und eine in Fig.1 ebenfalls mit einer strichlierten Linie umrandete Auswerteeinrichtung 31 zum Auswerten der abgetasteten Markiersignale auf. Die Aufzeichnungseinrichtung 30 enthält dabei eine Generatoreinrichtung 32 zum Erzeugen der zu speichernden Markiersignale. Die Auswerteeinrichtung 31 enthält eine Detektoreinrichtung 33 zum Detektieren der abgetasteten Markiersignale.

Die Generatoreinrichtung 32 besteht aus einer ersten Generatorstufe 34 zum Erzeugen eines ersten Signales, das eine erste Frequenz aufweist, und einer zweiten Generatorstufe 35 zum Erzeugen eines zweiten Signales, das eine zweite Frequenz aufweist. Dabei ist die Frequenz des ersten Signales mit 40 Hz und die Frequenz des zweiten Signales mit 1500 Hz gewählt. In vorliegendem Fall sind die beiden Generatorstufen 34 und 35 mit Hilfe des Mikroprozessors 14 realisiert, wobei dieselben impulsförmige Signale abgeben. Die impulsförmigen Signale der Generatorstufen 34 und 35 werden je einer als Tiefpaßfilter ausgebildeten Filterstufe 36 bzw. 37 zugeführt, die die impulsförmigen Signale in sinusförmige Signale S1 und S2 umformen, die der Summierstufe 20 zugeführt werden, über die die Signale S1 und S2 dem Umschalter 21 und dem Magnetkopf 5 zugeleitet werden. Die Generatoreinrichtung 32 weist ferner eine erste Zeitsteuerstufe Z1 und eine zweite Zeitsteuerstufe Z2 auf. Mit der ersten Zeitsteuerstufe Z1 ist die Auftrittszeitspanne für das erste Signal S1 festlegbar. Mit der zweiten Zeitsteuerstufe Z2 ist die Auftrittszeitspanne für das zweite Signal S2 festlegbar. Auch die beiden Zeitsteuerstufen Z1 und Z2 sind mit Hilfe des Mikroprozessors 14 realisiert, wobei dieselben als Zeitfensterstufen ausgebildet sind, wie aus nachfolgender Beschreibung des Flußdiagrammes gemäß Fig.2 hervorgeht.

Die Detektoreinrichtung 33 weist zwei Filterstufen 38 und 39 auf, denen die mit dem Magnetkopf 5 abgetasteten Signale über den Umschalter 21 zugeführt werden. An dieser Stelle ist festzuhalten, daß das Auswerten der Markiersignale bei einer gegenüber dem Aufzeichnen der Markiersignale um den Faktor 20 höheren Fortbewegungsgeschwindigkeit des Magnetbandes 2 erfolgt. Hiedurch erfolgt beim Abtasten der Markiersignale eine Frequenztransponierung der gespeicherten Signale S1 und S2, so daß den Signalen S1 und S2 entsprechende Signale S1′ und S2′ abgetastet werden, die eine Frequenz von 800 Hz und eine Frequenz von 30 kHz aufweisen. Mit der Filterstufe 38 ist aus dem ihr zugeführten Signalgemisch das dem ersten Signal S1 entsprechende Signal S1′ mit einer Frequenz von 800 Hz abtrennbar. Mit der zweiten Filterstufe 39 ist aus dem ihr zugeführten Signalgemisch das dem zweiten Signal S2 entsprechende Signal S2′ mit einer Frequenz von 30 kHz abtrennbar. Die Detektoreinrichtung 33 weist weiters eine der Filterstufe 38 nachgeschaltete Detektorstufe 40 zum Detektieren des dem ersten Signal entsprechenden Signales S1′ und eine der Filterstufe 39 nachgeschaltete Detektorstufe 41 zum Detektieren des dem zweiten Signal S2 entsprechenden Signales S2′ auf. Die beiden Detektorstufen 40 und 41 sind beispielsweise durch Gleichrichterstufen gebildet, die bei Auftreten des betreffenden entsprechenden Signales S1′ bzw. S2′ an ihrem Ausgang je ein vorgegebenes Ausgangssignal D1 bzw. D2 abgeben. Weiters weist die Detektoreinrichtung 33 eine der Detektorstufe 40 nachfolgende Zeitmeßstufe Z3 und eine der Detektorstufe 41 nachfolgende Zeitmeßstufe Z4 auf. Mit den beiden Zeitmeßstufen Z3 und Z4 ist jeweils die Auftrittszeitspanne des dem ersten Signal S1 bzw. dem zweiten Signal S2 entsprechenden Signales S1′ bzw. S2′ meßbar, die bei vorliegendem Gerät ein Zwanzigstel der Auftrittszeitspanne des ersten Signales S1 bzw. des zweiten Signales S2 ist. Die beiden Zeitmeßstufen Z3 und Z4 sind ebenfalls mit dem Mikroprozessor 14 realisiert und durch Zeitzählstufen gebildet, wie aus nachfolgender Beschreibung des Flußdiagrammes gemäß Fig.6 hervorgeht. Den beiden Zeitmeßstufen Z3 und Z4 folgt eine ebenfalls mit dem Mikroprozessor 14 realisierte Logikstufe 42 nach, der die Zeitmeßstufen Z3 und Z4 je nach gemessener Auftrittszeitspanne des Signales S1′ bzw. S2′ unterschiedliche Meßwerte C3 bzw. C4 zuführen und die in Abhängigkeit von den ihr zugeführten Meßwerten C3 bzw. C4 Detektionssignale H1, H2 und H3 erzeugt, die den vom Magnetband 2 abgetasteten Markiersignalen M1, M2 und M3 entsprechen. Die Logikstufe 42 weist drei Ausgänge P1, P2 und P3 auf, an die eine Gatterstufe 43 angeschlossen ist, deren Ausgang mit dem Steuereingang 13 der Bandantriebseinrichtung 7 verbunden ist und die bei Auftreten eines Detektionssignales H1, H2 bzw. H3 an einem der Ausgänge P1, P2 bzw. P3 an den Steuereingang 13 ein Steuersignal abgibt, das die Bandantriebseinrichtung 7 abschaltet, wobei das Antreiben des Magnetbandes 2 beendet wird.

Im folgenden ist anhand des in Fig.2 dargestellten Flußdiagrammes ein Programmablauf im Mikroprozessor 14 des Gerätes 1 zur Erzeugung der Markiersignale M1, M2 und M3 der drei unterschiedlichen Arten mit Hilfe des Systems 29 zum Aufzeichnen und Auswerten von Markiersignalen beschrieben. Beim Block 44 wird dieser Programmablauf gestartet. Beim nachfolgenden Block 45 wird geprüft, ob die Taste A betätigt wurde. Wenn dies der Fall ist, wird danach beim Block 46 ein Zeitfenster für die Zeitdauer T1 von beispielsweise 500 msec gestartet. Danach wird beim Block 47 geprüft, ob die Taste A ein zweites Mal betätigt wurde. Wenn dies der Fall ist, hat der Bedienende des Gerätes den Befehl gegeben, ein Markiersignal M3 der dritten Art zu erzeugen und auf dem Magnetband aufzuzeichnen. Daher wird nachfolgend beim Block 48 eine Betriebsart "Aufzeichnen eines Markiersignales" eingeschaltet, bei der die Bandantriebseinrichtung 7 das Magnetband 2 in Richtung des Pfeiles 6 mit einfacher normaler Fortbewegungsgeschwindigkeit antreibt, der Aufzeichnungs/Wiedergabe-Umschalter 21 in die in Fig.1 mit einer vollen Linie dargestellte Schaltstellung geschaltet wird und der Oszillator 22 zur Erzeugung eines Vormagnetisierungssignales eingeschaltet wird. Danach wird beim Block 49 eine die Zeitsteuerstufe Z1 bildende Zeitfensterstufe für eine Zeitspanne T von beispielsweise 650 msec und praktisch zugleich eine als Zeitsteuerstufe Z2 vorgesehene Zeitfensterstufe für die Zeitspanne T/2, also für 325 msec, eingeschaltet. Dadurch werden danach beim Block 50 die Generatorstufe 34 zum Erzeugen des ersten Signales S1 von der Zeitfensterstufe Z1 für die Zeitspanne T und praktisch zum gleichen Startzeitpunkt die Generatorstufe 35 zum Erzeugen des zweiten Signales S2 von der Zeitfensterstufe Z2 für die Zeitspanne T/2 aktiviert. Durch Abarbeiten der Blöcke 48, 49 und 50 werden impulsförmige Signale erzeugt, die von den Filterstufen 36 und 37 in sinusförmige Signale S1 und S2 umgeformt werden. Auf diese Weise wird ein Markiersignal M3 der dritten Art erzeugt, wie dies in Fig.5 dargestellt ist. Nach dem Block 50 wird der Programmablauf beim Block 51 fortgesetzt, der stellvertretend für eine Vielzahl weiterer Programmschritte steht. Nach Abarbeiten dieser Programmschritte gemäß dem Block 51 wird der Programmablauf gemäß Fig.2 wieder beim Block 45 fortgesetzt.

Wenn beim Block 47 keine zweimalige Tastenbetätigung der Taste A festgestellt wird, dann wird danach beim Block 52 geprüft, ob die Zeitdauer T1 des beim Block 46 gestarteten Zeitfensters abgelaufen ist. Durch die Zeitdauer T1 des Zeitfensters ist jene Zeitspanne festgelegt, innerhalb der die Taste A zweimal betätigt werden muß, um den Befehl zum Erzeugen und Aufzeichnen eines Markiersignales M3 der dritten Art zu geben. Wenn die Zeitdauer T1 nicht abgelaufen ist, wird der Programmablauf wieder beim Block 47 fortgesetzt. Ist jedoch die Zeitdauer T1 abgelaufen, was bedeutet, daß die Taste A nur einmal betätigt wurde, wodurch der Bedienende des Gerätes den Befehl gegeben hat, ein Markiersignal M1 der ersten Art zu erzeugen, dann wird beim Block 53 in Analogie zum Block 48 die Betriebsart "Aufzeichnen eines Markiersignales" eingeschaltet. Danach wird beim Block 54 die die Zeitsteuerstufe Z1 bildende Zeitfensterstufe für die Zeitspanne T von 650 msec eingeschaltet und praktisch zugleich die die Zeitsteuerstufe Z2 bildende Zeitfensterstufe auf den Wert Null gesetzt. Dadurch wird danach beim Block 55 die Generatorstufe 34 von der Zeitfensterstufe Z1 für die Zeitspanne T aktiviert, wogegen die Generatorstufe 35 in diesem Fall von der Zeitfensterstufe Z2 nicht aktiviert wird. Durch Abarbeiten der Blöcke 53, 54 und 55 wird ein Markiersignal M1 der ersten Art erzeugt, wie dies in Fig.3 dargestellt ist. Nach dem Block 55 wird der Programmablauf beim Block 51 fortgesetzt.

Wenn beim Block 45 festgestellt wird, daß die Taste A nicht betätigt wurde, dann wird danach beim Block 56 geprüft, ob die Taste B betätigt wurde. Wenn dies nicht der Fall ist, dann wird der Programmablauf beim Block 51 fortgesetzt. Ist dies jedoch der Fall, wenn also der Bedienende des Gerätes den Befehl zur Erzeugung eines Markiersignales M2 der zweiten Art gegeben hat, dann wird danach beim Block 57 in Analogie zu den Blöcken 48 und 53 die Betriebsart "Aufzeichnen eines Markiersignales" eingeschaltet. Danach wird beim Block 58 die die Zeitsteuerstufe Z1 bildende Zeitfensterstufe für die Zeitspanne T von 650 msec und praktisch zugleich die die Zeitsteuerstufe Z2 bildende Zeitfensterstufe ebenfalls für die Zeitspanne T eingeschaltet. Dadurch werden danach beim Block 59 die beiden Generatorstufen 34 und 35 von den beiden Zeitfensterstufen Z1 und Z2 praktisch zugleich je für die Zeitspanne T aktiviert. Durch Abarbeiten der Blöcke 57, 58 und 59 wird ein Markiersignal M2 der zweiten Art erzeugt, wie dies in Fig.4 dargestellt ist. Nach dem Block 59 wird der Programmablauf beim Block 51 fortgesetzt.

Nachfolgend ist anhand des in Fig.6 dargestellten Flußdiagrammes ein Programmablauf im Mikroprozessor 14 des Gerätes 1 beschrieben, der zum Auswerten von auf die vorstehend beschriebene Weise erzeugten Markiersignalen M1, M2 und M3 der drei unterschiedlichen Arten durchlaufen wird. Beim Block 60 wird dieser Programmablauf gestartet. Beim Block 61 wird danach geprüft, ob eine von den drei Tasten C, D und E betätigt wurde. Wenn dies nicht der Fall ist, dann wird der Programmablauf beim Block 62 fortgesetzt, der stellvertretend für eine Vielzahl von programmschritten steht. Nach Abarbeiten dieser Programmschritte gemäß dem Block 62 wird der vorliegende Programmablauf wieder beim Block 61 fortgesetzt.

Wenn beim Block 61 festgestellt wird, daß eine von den drei Tasten C, D und E betätigt wurde, dann wird nachfolgend beim Block 63 ein Kennungssignal dafür gespeichert, welche von diesen drei Tasten C, D und E betätigt wurde. Danach wird beim Block 64 die Betriebsart "Auswerten eines Markiersignales" eingeschaltet, wobei zuerst das Magnetband 2 von der Bandantriebseinrichtung 7 mit zwanzigfacher Fortbewegungsgeschwindigkeit entgegen der Richtung des Pfeiles 6 angetrieben wird, bis der Beginn des Magnetbandes 2 dem Magnetkopf 5 gegenüberliegt, und danach die Bandantriebseinrichtung 7 das Magnetband 2 in Richtung des Pfeiles 6 mit zwanzigfacher Fortbewegungsgeschwindigkeit antreibt und der Aufzeichnungs/Wiedergabe-Umschalter 21 in seine in Fig.1 mit einer strichlierten Linie dargestellte Schaltstellung umgeschaltet wird. Danach wird beim Block 65 geprüft, ob am Ausgang der Detektorstufe 40 ein Ausgangssignal D1 vorliegt. Wenn dies nicht der Fall ist, wird der Programmablauf beim Block 62 fortgesetzt. Ist dies jedoch der Fall, was bedeutet, daß ein Signal S1′ vom Magnetband 2 abgetastet wird, dann wird beim Block 66 eine als Zeitmeßstufe Z3 vorgesehene Zeitzählstufe gestartet. Danach wird beim Block 67 geprüft, ob am Ausgang der Detektorstufe 41 ein Ausgangssignal D2 vorliegt. Wenn dies nicht der Fall ist, wenn also vom Magnetband kein Signal S2′ abgetastet wird, dann wird beim Block 68 eine als Zeitmeßstufe Z4 vorgesehene Zeitzählstufe auf den Wert Null gesetzt, wobei dann in der Zeitmeßstufe Z4 der gesetzte Zählerstand Null als Meßwert C4 gespeichert bleibt. Wird aber beim Block 67 ein Ausgangssignal D2 festgestellt, was bedeutet, daß ein Signal S2′ vom Magnetband 2 abgetastet wird, dann wird beim Block 69 die als Zeitmeßstufe Z4 vorgesehene Zeitzählstufe gestartet. Danach wird beim Block 70 geprüft, ob das Ausgangssignal D2 der Detektorstufe 41 noch vorhanden ist. Wenn dies der Fall ist, wird der Programmablauf wieder beim Block 70 fortgesetzt, dies solange, als das Ausgangssignal D2 vorhanden ist. Wenn beim Block 70 festgestellt wird, daß das Ausgangssignal D2 der Detektorstufe 41 nicht mehr vorhanden ist, wird danach beim Block 71 die als Zeitmeßstufe Z4 vorgesehene Zeitzählstufe gestoppt, wobei dann der erreichte Zählerstand als Meßwert C4 in der Zeitmeßstufe Z4 gespeichert bleibt. Nach dem Block 71 wird ebenso wie nach dem Block 68 der Programmablauf beim Block 72 fortgesetzt, bei dem geprüft wird, ob das Ausgangssignal D1 der Detektorstufe 40 noch vorhanden ist. Wenn dies der Fall ist, wird der Programmablauf wieder beim Block 72 fortgesetzt, dies solange, als das Ausgangssignal D1 vorhanden ist. Wenn beim Block 72 festgestellt wird, daß das Ausgangssignal D1 der Detektorstufe 40 nicht mehr vorhanden ist, dann wird danach beim Block 73 die als Zeitmeßstufe Z3 vorgesehene Zeitzählstufe gestoppt, wobei dann der erreichte Zählerstand als Meßwert C3 in der Zeitmeßstufe Z3 gespeichert bleibt.

Danach wird beim Block 74 der Quotient aus den Zählerständen C4 und C3 der Zeitzählstufen Z4 und Z3 gebildet. Danach wird beim Block 75 geprüft, ob dieser Quotient den Wert Null aufweist. Wenn dies der Fall ist, was bedeutet, daß ein Markiersignal M1 der ersten Art abgetastet wurde, wird beim Block 76 geprüft, ob die Taste C betätigt wurde, die zum Auffinden und Auswerten eines Markiersignales M1 der ersten Art zu betätigen ist. Die Prüfung beim Block 76 wird durch Überprüfung des beim Block 63 abgespeicherten Kennungssignales durchgeführt. Wenn beim Block 76 festgestellt wird, daß die Taste C nicht betätigt wurde, dann wird der Programmablauf beim Block 62 fortgesetzt. Wenn aber beim Block 76 festgestellt wird, daß die Taste C betätigt wurde, dann gibt beim Block 77 die Logikstufe 42 an ihrem Ausgang P1 ein Detektionssignal H1 ab. Dieses Detektionssignal H1 gibt an, daß wunschgemäß ein Markiersignal M1 der ersten Art ausgewertet wurde. Dieses Detektionssignal H1 wird über die Gatterstufe 43 dem Steuereingang 13 der Bandantriebseinrichtung 7 zugeführt, wodurch diese beim Auffinden eines solchen Markiersignales abgeschaltet wird. Selbstverständlich könnte das Detektionssignal H1 auch anders verwendet werden, beispielsweise indem dasselbe einer optischen Anzeigeeinrichtung zum Anzeigen des Vorhandenseins eines Markiersignales der ersten Art zugeführt wird. Nach dem Block 77 wird der Programmablauf beim Block 62 fortgesetzt.

Wenn beim Block 75 festgestellt wird, daß der beim Block 74 gebildete Quotient aus den Zählerständen C4 und C3 nicht den Wert Null aufweist, dann wird danach beim Block 78 geprüft, ob der beim Block 74 gebildete Quotient den Wert 1/2 aufweist. Wenn dies der Fall ist, was bedeutet, daß ein Markiersignal M3 der dritten Art abgetastet wurde, dann wird beim Block 79 geprüft, ob die Taste E betätigt wurde, die zu betätigen ist, um ein Markiersignal M3 der dritten Art aufzufinden und auszuwerten. Wenn dies nicht der Fall ist, also die Taste E nicht betätigt wurde, dann wird der Programmablauf beim Block 62 fortgesetzt. Wenn dies aber der Fall ist, also die Taste E betätigt wurde, dann gibt beim Block 80 die Logikstufe 42 an ihrem Ausgang P3 ein Detektionssignal H3 ab. Dieses Detektionssignal H3 gibt an, daß wunschgemäß ein Markiersignal M3 der dritten Art ausgewertet wurde. Nach dem Block 80 wird der Programmablauf beim Block 62 fortgesetzt.

Wenn beim Block 78 festgestellt wird, daß der beim Block 74 gebildete Quotient aus den Zählerständen C4 und C3 nicht den Wert 1/2 aufweist, dann bedeutet dies im vorliegenden Fall, daß der Quotient den Wert 1 aufweisen muß, also ein Markiersignal M2 der zweiten Art vorliegen muß, so daß eine Prüfung, ob der Quotient den Wert 1 aufweist, nicht separat erfolgen muß. Deshalb wird der Programmablauf in diesem Fall ohne diese Prüfung beim Block 81 fortgesetzt. Beim Block 81 wird geprüft, ob die Taste D betätigt wurde, die zu betätigen ist, um ein Markiersignal M2 der zweiten Art aufzufinden und auszuwerten. Wenn beim Block 81 festgestellt wird, daß die Taste D betätigt wurde, dann gibt nachfolgend beim Block 82 die Logikstufe 42 an ihrem Ausgang P2 ein Detektionssignal H2 ab. Dieses Detektionssignal H2 gibt an, daß wunschgemäß ein Markiersignal M2 der zweiten Art ausgewertet wurde. Nach dem Block 82 wird der Programmablauf beim Block 62 fortgesetzt. Für den Fall, daß beim Block 81 festgestellt wird, daß auch die Taste D nicht betätigt wurde, dann ist anzunehmen, daß ein Auswertevorgang für Markiersignale durch einen Betriebsfehler ausgelöst wurde, wobei dann die Erzeugung eines Detektionssignales durch die Logikstufe 42 unterbunden wird, und deshalb der Programmablauf beim Block 62 fortgesetzt wird.

Wie aus vorstehender Beschreibung hervorgeht, sind mit dem erfindungsgemäßen System auf besonders einfache Weise Markiersignale dreier voneinander unterschiedlicher Arten auf dem Magnetband 2 aufzeichenbar und nach deren Abtastung vom Magnetband auswertbar. Dabei ist aus den Figuren 3, 4 und 5 ersichtlich, daß das Markiersignal M1 der ersten Art nur aus dem Signal S1 besteht, das eine Frequenz von 40 Hz aufweist und in der Auftrittszeitspanne T auftritt, und daß das Markiersignal M2 der zweiten Art und das Markiersignal M3 der dritten Art aus dem ersten Signal S1, das eine Frequenz von 40 Hz aufweist, und dem zweiten Signal S2, das eine Frequenz von 1500 Hz aufweist, bestehen und die Auftrittszeitspanne des ersten Signales S1 in diesen beiden Markiersignalen M1 und M2 gleich T ist. Der Unterschied zwischen dem Markiersignal M2 der zweiten Art und dem Markiersignal M3 der dritten Art liegt darin, daß die Auftrittszeitspanne des zweiten Signales S2 beim Markiersignal M3 der dritten Art nur gleich T/2, hingegen beim Markiersignal M2 der zweiten Art gleich T ist. Hiedurch ist erreicht, daß die Markiersignale der zweiten und dritten Art auch eindeutig und einwandfrei voneinander unterscheidbar sind. Da die Markiersignale der zweiten Art und der dritten Art aber beide aus denselben Signalen S1 und S2 bestehen, ist erreicht, daß die Markiersignale dieser beiden Arten auch mit einer Auswerteeinrichtung, die keine Zeitmeßstufen für die Auftrittszeitspannen der den Signalen S1 und S2 entsprechenden Signale S1′ und S2′ aufweisen, sondern nur Detektorstufen, mit denen das Auftreten dieser entsprechenden Signale S1′ und S2′ an sich feststellbar ist, detektierbar sind. Mit einer solchen Auswerteeinrichtung können zwar Markiersignale der zweiten Art und Markiersignale der dritten Art nicht nach ihrer Art voneinander unterschieden werden, aber es kann sehr wohl das Vorhandensein jedes dieser Markiersignale festgestellt werden. Da zur Auswertung der Markiersignale der Quotient, also das Verhältnis der Meßwerte der Zeitmeßstufen herangezogen wird, ist die Auswertung vorteilhafterweise unabhängig von der Fortbewegungsgeschwindigkeit des Magnetbandes beim Abtasten der Markiersignale.

Markiersignale der vorstehend angeführten drei Arten werden von einem Diktierenden zur Kennzeichnung von Diktaten bzw. Diktatstellen am Magnetband aufgezeichnet. Markiersignale der ersten Art kennzeichnen beispielsweise jeweils das Diktatende eines auf dem Magnetband gespeicherten Diktates, zu dem vom Diktierenden keine besonderen Hinweise, Wünsche oder Anforderungen hinsichtlich der Auswertung durch eine Schreibkraft abgegeben wurden. Ein solches Markiersignal der ersten Art wird dann auf dem Magnetband aufgezeichnet, wenn ein Diktatende eines solchen auf dem Magnetband gespeicherten Diktates dem Aufzeichnungs/Wiedergabe-Magnetkopf gegenüberliegt. Markiersignale der zweiten Art kennzeichnen beispielsweise jeweils eine Diktatstelle eines auf dem Magnetband gespeicherten Diktates, zu der ein Diktierender eine spezielle Anweisung, wie eine Diktateinfügung, eine Diktatkorrektur oder einen das Diktat betreffenden bzw. auch einen vom Diktat unabhängigen Wunsch, geben will bzw. gegeben hat, die ebenfalls auf dem Magnetband oder aber auch auf einem separaten Speicherelement, wie einem weiteren Magnetband oder einem Notizzettel, gespeichert sein kann. Markiersignale der dritten Art kennzeichnen beispielsweise jeweils das Diktatende oder den Diktatanfang eines auf dem Magnetband gespeicherten Diktates, dem vom Diktierenden hinsichtlich der Auswertung durch eine Schreibkraft besondere Wichtigkeit bzw. zeitlicher Vorrang zugeordnet wurde; solche Diktate werden als sogenannte Prioritäts-Diktate bezeichnet.

Selbstverständlich kann mit einem wie vorstehend beschriebenen erfindungsgemäßen System zum Aufzeichnen und Auswerten von Markiersignalen auch noch ein weiteres Markiersignal der dritten Art bzw. auch mehrere weitere solche Markiersignale der dritten Art auf dem Magnetband gespeichert werden. Beispielsweise kann ein solches weiteres Markiersignal der dritten Art aus dem ersten Signal S1 mit einer Frequenz von 40 Hz und mit einer Auftrittszeitspanne T und aus dem zweiten Signal S2 mit einer Frequenz von 1500 Hz und mit einer Auftrittszeitspanne T/4 zusammengesetzt sein. Mit einem solchen weiteren Markiersignal der dritten Art kann beispielsweise jeweils das Ende von einer auf dem Magnetband gespeicherten Gruppe zusammengehöriger Diktate, wobei diese Gruppe von Diktaten beispielsweise von einem einzigen Diktierenden stammt oder diese Gruppe von Diktaten sich auf ein zusammengehöriges Sachgebiet bezieht, gekennzeichnet sein. Eine solche Gruppe zusammengehöriger Diktate kann auch dadurch gebildet sein, daß diese Diktate über ein Telefonnetz zu einem an das Telefonnetz anschließbaren Diktiergerät während eines einzigen ununterbrochenen Anrufes übertragen werden, wobei dann in diesem Diktiergerät nach Abschluß der Übertragung dieser Diktate und Beendigung des Anrufes automatisch die Aufzeichnung eines solchen weiteren Markiersignales der dritten Art ausgelöst wird.

Bei dem in Fig.7 nur teilweise dargestellten Ausführungsbeispiel eines zweiten erfindungsgemäßen Systems 29 zum Aufzeichnen und Auswerten von Markiersignalen sind in Abwandlung gegenüber dem System gemäß Fig.1 die Generatorstufen 34 und 35 und die Zeitsteuerstufen Z1 und Z2 der Generatoreinrichtung 32 der Aufzeichnungseinrichtung 30 ohne Ausnützung des Mikroprozessors 14 mit Kilfe von diskreten Bauteilen aufgebaut. Die beiden Generatorstufen 34 und 35 sind dabei als Sinusgeneratoren ausgebildet, die ständig das erste Signal S1 und das zweite Signal S2 abgeben. Die beiden Zeitsteuerstufen Z1 und Z2 sind in vorliegendem Fall als von der Steuerstufe 12 steuerbare Torschaltungen ausgebildet, die die von den Generatorstufen 34 und 35 abgegebenen Signale S1 und S2 für eine jeweils von der Steuerstufe 12 festgelegte Auftrittszeitspanne durchlassen. Die von den Zeitsteuerstufen Z1 und Z2 durchgelassenen Signale S1 und S2 werden unmittelbar der Summierstufe 20 zugeführt, von der die Signale S1 und S2 dem Aufzeichnungs/Wiedergabe-Magnetkopf zum Aufzeichnen auf dem Magnetband zugeführt werden. In diesem Fall erübrigt sich das Vorsehen von Filterstufen für die Signale S1 und S2, bevor diese der Summierstufe 20 zugeführt werden.

Bei dem in Fig.8 nur teilweise dargestellten Ausführungsbeispiel eines dritten erfindungsgemäßen Systems 29 zum Aufzeichnen und Auswerten von Markiersignalen weist die Detektoreinrichtung 33 der Auswerteeinrichtung 31 einen gegenüber dem System gemäß Fig.1 unterschiedlichen Aufbau auf. Bei dieser Detektoreinrichtung 33 ist der Detektorstufe 40, mit der das dem Signal S1 entsprechende Signal S1′ detektierbar ist, keine Zeitmeßstufe nachgeschaltet. Das Ausgangssignal D1 der Detektorstufe 40 wird bei dieser Detektoreinrichtung 33 unmittelbar der Logikstufe 42 zugeführt. Bei dieser Detektoreinrichtung 33 wird somit nur das Auftreten des entsprechenden Signales S1′ an sich, nicht jedoch die Auftrittszeitspanne dieses entsprechenden Signales S1′ bestimmt, was dann möglich ist, wenn die Auftrittszeitspanne des Signales S1 und folglich des hiezu entsprechenden Signales S1′ bei allen Markiersignalen der drei unterschiedlichen Arten gleich lang gewählt ist. Beim Auswerten der Markiersignale wird das Auftreten des entsprechenden Signales S1′ an sich detektiert und zur Unterscheidung der unterschiedlichen Arten der Markiersignale wird die Auftrittszeitspanne des dem Signal S2 entsprechenden Signales S2′ gemessen und der dabei ermittelte Meßwert C4 gemeinsam mit dem Ausgangssignal D1 der Detektorstufe 40 in der Logikstufe 42 ausgewertet. Bei diesem System 29 werden die Detektionssignale H1, H2 und H3 keiner Gatterstufe zugeführt, sondern je einer Anzeigelampe L1, L2 bzw. L3, die zum Anzeigen des Vorhandenseins einer Markierung der ersten, zweiten bzw. dritten Art beispielsweise kurzzeitig zum Aufleuchten gebracht werden.

In Fig.9 ist ein Beispiel für ein weiteres Markiersignal M4 der dritten Art dargestellt. Dieses Markiersignal M4 setzt sich aus dem ersten Signal S1 mit einer Frequenz von 40 Hz, für das eine Auftrittszeitspanne T gewählt ist, und aus dem zweiten Signal S2 mit einer Frequenz von 1500 Hz, für das eine Auftrittszeitspanne T/2 gewählt ist, zusammen, wobei aber der Auftrittszeitpunkt des zweiten Signales S2 um eine Zeitspanne T/4 gegenüber dem Auftrittszeitpunkt des ersten Signales S1 verschoben ist. Ein solches Markiersignal ist im Hinblick auf seine Auswertung dahingehend vorteilhaft, daß bei der Auswertung desselben der Zeitpunkt des Einschaltens der Zeitmeßstufe zum Messen der Auftrittszeitspanne des dem zweiten Signal entsprechenden Signales S2′ unkritisch ist im Verhältnis zum Einschalten der Zeitmeßstufe zum Messen der Auftrittszeitspanne des dem ersten Signal S1 entsprechenden Signales S1′.

Bei dem in Fig. 10 dargestellten weiteren Markiersignal M5 der dritten Art erstreckt sich das erste Signal S1 wiederum über die Auftrittszeitspanne T und das zweite Signal S2 über eine Auftrittszeitspanne T/2, die sich hiebei aber aus zwei Teilen zu je einer Auftrittszeitspanne von T/4 zusammensetzt, die durch eine Auftrittslücke von T/2 voneinander getrennt sind. Dieses Markiersignal hat den Vorteil, daß trotz unterschiedlich langer Auftrittszeitspannen der beiden Signale S1 und S2 die beiden Signale S1 und S2 den gleichen Auftrittszeitpunkt und den gleichen Endzeitpunkt aufweisen, so daß beim Auswerten derselben die Zeitmeßstufen zum Messen der Auftrittszeitspannen der den Signalen S1 und S2 entsprechenden Signale S1′ und S2′ zum selben Zeitpunkt gestartet und auch gestoppt werden können.

Wie aus vorstehendem ersichtlich ist, gibt es eine Reihe von Ausführungsbeispielen eines erfindungsgemäßen Systems zum Aufzeichnen und Auswerten von Markiersignalen. Beispielsweise kann bei einem solchen System dessen Aufzeichnungseinrichtung für Markiersignale in einem separaten Aufzeichnungsgerät, das nur zum Aufzeichnen von Diktaten ausgebildet ist, und dessen Auswerteeinrichtung in einem separaten Wiedergabegerät, das nur zum Wiedergeben von Diktaten ausgebildet ist, vorgesehen sein. Ein solches System zum Aufzeichnen und Wiedergeben von Markiersignalen kann nicht nur in einem Diktiersystem zum Aufzeichnen und Wiedergeben von Diktaten, sondern auch in anderen Systemen zum Aufzeichnen und Wiedergeben von anderen Informationssignalen verwendet werden. Das Aufzeichnen von Markiersignalen kann bei an sich in einem Gerät eingeschalteter Betriebsart "Aufzeichnen" oder auch bei an sich in einem Gerät eingeschalteter Betriebsart "Wiedergeben" oder auch bei an sich in einem Gerät eingeschalteter Betriebsart "Stop" erfolgen. Die Markiersignale müssen nicht gemeinsam mit den Informationssignalen in derselben Spur auf einem Aufzeichnungsträger aufgezeichnet werden, sondern können auch in einer separaten Spur aufgezeichnet werden. Als Markiersignale der dritten Art sind auch noch weitere Signalzusammensetzungen möglich. Beispielsweise kann sich ein solches weiteres Markiersignal der dritten Art aus dem ersten Signal S1 mit einer Auftrittszeitspanne T und dem zweiten Signal S2 mit einer Auftrittszeitspanne 2T zusammensetzen. Auch kann sich ein solches weiteres Markiersignal der dritten Art aus dem ersten Signal S1 mit einer Auftrittszeitspanne T/3 und dem zweiten Signal S2 mit einer Auftrittszeitspanne T zusammensetzen. Bei dem letztgenannten Markiersignal der dritten Art weist somit das erste Signal S1 eine vom Wert T unterschiedliche Auftrittszeitspanne auf.

## Patentansprüche

1. System (1) zum Aufzeichnen und Auswerten von auf einem Aufzeichnungsträger (2) speicherbaren und von demselben abtastbaren, voneinander unterscheidbaren Markiersignalen (M1, M2) mit einer Aufzeichnungseinrichtung (30) zum Aufzeichnen der zu speichernden Markiersignale (M1, M2) und mit einer Auswerteeinrichtung (29) zum Auswerten der abgetasteten Markiersignale (M1, M2), wobei die Aufzeichnungseinrichtung (30) eine Generatoreinrichtung (32) zum Erzeugen der zu speichernden Markiersignale (M1, M2) und die Auswerteeinrichtung (29) eine Detektoreinrichtung (33) zum Detektieren der abgetasteten Markiersignale (M1, M2) aufweist und die Generatoreinrichtung (32) eine erste Generatorstufe (34,36) zum Erzeugen eines ersten Signales (S1), das eine erste Frequenz aufweist, eine zweite Generatorstufe (35,37) zum Erzeugen eines zweiten Signales (S2) , das eine zweite Frequenz aufweist wobei die erste und zweite Frequenz unterschiedlich sind, eine erste Zeitsteuerstufe (Z1), mit der die Auftrittszeitspanne für das erste Signal (S1) festlegbar ist, und eine zweite Zeitsteuerstufe (Z2), mit der die Auftrittszeitspanne für das zweite Signal (S2) festlegbar ist, enthält, und zum Erzeugen eines nur aus dem ersten Signal (S1) bestehenden Markiersignales einer ersten Art (M1) die erste Zeitsteuerstufe (Z1) für die Auftrittszeitspanne des ersten Signales (S1) einen vorgegebenen Wert T und zugleich die zweite Zeitsteuerstufe (Z2) für die Auftrittszeitspanne des zweiten Signales (S2) den Wert Null festlegt und zum Erzeugen eines aus dem ersten Signal (S1) und dem zweiten Signal (S2) bestehenden Markiersignales einer zweiten Art (M2) die erste Zeitsteuerstufe (Z1) für die Auftrittszeitspanne des ersten Signales (S1) und zugleich die zweite Zeitsteuerstufe (Z2) für die Auftrittszeitspanne des zweiten Signales (S2) je den Wert T festlegen, und die Detektoreinrichtung (33) eine erste Detektorstufe (38,40) zum Detektieren eines vom Aufzeichnungsträger (2) abgetasteten, dem ersten Signal (S1) entsprechenden Signales (S1′) und eine zweite Detektorstufe (39,41) zum Detektieren eines vom Aufzeichnungsträger (2) abgetasteten, dem zweiten Signal (S2) entsprechenden Signales (S2′), die beide bei Auftreten des betreffenden entsprechenden Signales (S1′,S2′) je ein Ausgangssignal abgeben (D1,D2) und eine den beiden Detektorstufen (38-41) nachfolgende Logikstufe (42) enthält, die in Abhängigkeit von den Ausgangssignalen (D1,D2) der beiden Detektorstufen den vom Aufzeichnungsträger (2) abgetasteten Markiersignalen (M1,M2) entsprechende Detektionssignale (H1,H2) erzeugt und abgibt, dadurch gekennzeichnet, daß zum Erzeugen mindestens eines aus dem ersten Signal (S1) und dem zweiten Signal (S2) bestehenden Markiersignales einer dritten Art (M3) mindestens eine der beiden Zeitsteuerstufen (Z1,Z2) die mit ihr festlegbare Auftrittszeitspanne für das betreffende Signal auf mindestens einen vom Wert T unterschiedlichen Wert festlegt und daß die Detektoreinrichtung (33) zusätzlich zu den beiden Detektorstufen (38,41) zum Detektieren der beiden vom Aufzeichnungsträger abgetasteten, dem ersten Signal (S1) und dem zweiten Signal (S2) entsprechenden Signale (S1′,S2′) für mindestens eines dieser beiden entsprechenden Signale, das einem der beiden Signale entspricht, für das mit einer der beiden Zeitsteuerstufen (Z1,Z2) mindestens eine vom Wert T unterschiedliche Auftrittszeitspanne festlegbar ist, eine Zeitmeßstufe (Z3,Z4) zum Messen der Auftrittszeitspanne dieses mindestens einen entsprechenden Signales enthält, die je nach gemessener Auftrittszeitspanne unterschiedliche Meßwerte der Logikstufe (42) zum Erzeugen der den vom Aufzeichnungsträger (2) abgetasteten Markiersignalen (M1,M3) entsprechenden Detektionssignale (H1,H3) zuführt.

2. System nach Anspruch 1, dadurch gekennzeichnet, daß zum Erzeugen mindestens eines Markiersignales der dritten Art (M3) die erste Zeitsteuerstufe (Z1) für die Auftrittszeitspanne des ersten Signales (S1) den Wert T und zugleich die zweite Zeitsteuerstufe (Z2) für die Auftrittszeitspanne des zweiten Signales (S2) mindestens einen vom Wert T unterschiedlichen Wert festlegt.

3. System nach Anspruch 2, dadurch gekennzeichnet, daß zum Erzeugen eines Markiersignales der dritten Art (M3) die erste Zeitsteuerstufe (Z1) für die Auftrittszeitspanne des ersten Signales (S1) den Wert T und zugleich die zweite Zeitsteuerstufe (Z2) für die Auftrittszeitspanne des zweiten Signales (S2) den Wert T/2 festlegt.

4. System nach einem der vorhergehenden Ansprüche, dadurch gekennzeichnet, daß zum Erzeugen mindestens eines Markiersignales der dritten Art (M3) die beiden Zeitsteuerstufen (Z1,Z2) für die Auftrittszeitspannen der beiden Signale (S1,S2) denselben Startzeitpunkt festlegen.

5. System nach einem der vorhergehenden Ansprüche, dadurch gekennzeichnet, daß die beiden Zeitsteuerstufen (Z1,Z2) die beiden Generatorstufen (34-37) zum Erzeugen des ersten Signales (S1) und des zweiten Signales (S2) aktivieren.

6. System nach einem der vorhergehenden Ansprüche mit einem zum Auslösen des Erzeugens und Aufzeichnens eines Markiersignales der ersten Art (M1) vorgesehenen ersten Bedienungsorgan (A) und mit einem zum Auslösen des Erzeugens und Aufzeichnens eines Markiersignales der zweiten Art (M2) vorgesehenen zweiten Bedienungsorgan B, dadurch gekennzeichnet, daß das Erzeugen und Aufzeichnen mindestens eines Markiersignales der dritten Art (M3) durch innerhalb einer vorgegebenen Zeitdauer mindestens zweifach aufeinanderfolgendes Betätigen eines der beiden Bedienungsorgane (A,B) aus lösbar ist.

7. System nach einem der vorhergehenden Ansprüche, dadurch gekennzeichnet, daß die Detektoreinrichtung (33) für das vom Aufzeichnungsträger (2) abgetastete, dem ersten Signal (S1) entsprechende Signal (S1′) eine erste Zeitmeßstufe (Z3) zum Messen der Auftrittszeitspanne dieses entsprechenden Signales und für das vom Aufzeichnungsträger (2) abgetastete, dem zweiten Signal (S2) entsprechende Signal (S2′) eine zweite Zeitmeßstufe (Z4) zum Messen der Auftrittszeitspanne dieses entsprechenden Signales enthält, die beide die von ihnen ermittelten Meßwerte der Logikstufe (42) zuführen, und daß die Logikstufe in Abhängigkeit vom Verhältnis der ihr zugeführten Meßwerte die den abgetasteten Markiersignalen (M1-M3) entsprechenden Detektionssignale (M1-M3) erzeugt.

## Claims

1. A system (1) for recording and detecting marking signals (M1, M2) which can be stored on and scanned from a record carrier (2) and which can be distinguished from one another, comprising a recording device (30) for recording the marking signals (M1, M2) to be stored and a detection device (29) for detecting the marking signals being scanned, the recording device (30) comprising a generator device (32) for generating the marking signals (M1, M2) to be stored and the detection device (29) comprising a detector means (33) for detecting the marking signals (M1, M2) being scanned, which generator device (32) comprises a first generator stage (34, 36) for generating a first signal (S1) having a first frequency, a second generator stage (35, 37) for generating a second signal (S2) having a second frequency, the first frequency and the second frequency being different, a first time-control stage (Z1) by means of which the length of time of the first signal (S1) can be defined, and a second time-control stage (Z2) by means of which the length of time of the second signal (S2) can be defined, the first time-control stage (Z1) defining a given value T for the length of the first signal (S1) and the second time-control stage (Z2) at the same time defining the value zero for the length of the second signal (S2) in order to generate a marking signal of a first type (M1) consisting only of the first signal (S1), and the first time-control stage (Z1) defining the value T for the length of the first signal (S1) and the second time-control stage (Z2) at the same time defining the value T for the length of the second signal in order to generate a marking signal of a second type (M2) consisting of the first signal (S1) and of the second signal (S2), said detector means (33) comprising a first detector stage (38, 40) for detecting a signal (S1′) scanned from the record carrier (2) and corresponding to the first signal (S1), a second detector stage (39, 41) for detecting a signal (S2′) scanned from the record carrier and corresponding to the second signal (S2), which stages each supply an output signal (D1, D2) when the relevant corresponding signal (S1′, S2′,) occurs, and a logic stage (42) which follows the two detector stages and which, depending on the output signals of the two detector stages (38-41), generates and supplies detection signals (H1, H2) corresponding to the marking signals (M1, M2) scanned from the record carrier (2), characterised in that for generating at least one marking signal of a third type (M3) made up of the first signal (S1) and the second signal (S2) at least one of the two time-control stages (Z1, Z2) sets the length of the relevant signal which can be defined by said stage to at least a value which differs from the value T, and in that, in addition to the two detector stages (38-41) for detecting the two signals (S1′, S2′) scanned from the record carrier and corresponding to the first signal (S1) and the second signal (S2), the detector means (33) comprises a time-measurement stage (Z3, Z4) for measuring the length of said at least one corresponding signal, for which at least a length which differs from the value T can be defined by means of one of the two time-control stages (Z1, Z2), which time-measurement stage depending on the measured length applies different measurement values to the logic stage (42) in order to generate detection signals (H1-H3) corresponding to the marking signals (M1-M3) scanned from the record carrier (2).

2. A system as claimed in Claim 1, characterised in that for generating at least one marking signal of the third type (M3) the first time-control stage (Z1) defines the value T for the length of the first signal (S1) and, at the same time, the second time-control stage (Z2) defines at least a value which differs from the value T for the length of the second signal (S2).

3. A system as claimed in Claim 2, characterised in that for generating a marking signal of the third type (M3) the first time-control stage (Z1) defines the value T for the length of the first signal (S1) and, at the same time, the second time-control stage (Z2) defines the value T/2 for the length of the second signal (S2).

4. A system as claimed in any one of the preceding Claims, characterised in that for generating at least one marking signal of the third type (M3) the two time-control stages (Z1, Z2) define the same starting instant for the lengths of both signals (S1, S2).

5. A system as claimed in any one of the preceding Claims, characterised in that the two time-control stages (Z1, Z2) activate the two generator stages (34-37) to generate the first signal (S1) and the second signal (S2).

6. A system as claimed in any one of the preceding Claims, comprising a first actuating element (A) for starting the generation and recording of a marking signal of the first type (M1) and a second actuating element (B) for starting the generation and recording of a marking signal of the second type (M2), characterised in that the generation and recording of at least one marking signal of the third type (M3) can be started by actuating one of the two actuating elements (A, B) at least twice in succession within a given time interval.

7. A system as claimed in any one of the preceding Claims, characterised in that the detector means comprises a first time-measurement stage (Z3) for measuring the length of the signal (S1′) scanned from the record carrier (2) and corresponding to the first signal (S1), and a second time-measurement stage (Z4) for measuring the length of the signal (S2′) scanned from the record carrier (2) and corresponding to the second signal S2), which stages both supply their measurement values to the logic stage (42), and in that depending on the ratio between the measurement values supplied to the logic stage said logic stage generates detection signals (H1-H3) corresponding to the marking signals (M1-M3) being scanned.

## Revendications

1. Système (1) d'enregistrement et d'évaluation de signaux de repérage (M1, M2) différenciables les uns des autres, qui peuvent être mémorisés sur un support d'enregistrement (2) et extraits par lecture de celuici, comprenant un dispositif d'enregistrement (30) pour enregistrer les signaux de repérage à mémoriser (M1, M2) et un dispositif d'évaluation (29) pour évaluer les signaux de repérage lus (M1, M2), le dispositif d'enregistrement (30) comportant un dispositif générateur (32) pour produire les signaux de repérage à mémoriser (M1, M2) et le dispositif d'évaluation (29) comportant un dispositif de détection (33) pour détecter les signaux de repérage (M1, M2) lus, le dispositif générateur (32) comprenant un premier étage générateur (34, 36) pour produire un premier signal (S1) qui présente une première fréquence, un deuxième étage générateur (35, 37) pour produire un deuxième signal (S2) qui présente une deuxième fréquence, la première et la deuxième fréquences étant différentes, un premier étage de synchronisation (Z1) qui permet de fixer l'intervalle de temps d'apparition du premier signal (S1), et un deuxième étage de synchronisation (Z2) qui permet de fixer l'intervalle de temps d'apparition du deuxième signal (S2), et dans lequel, pour produire un signal de repérage d'un premier type (M1) qui n'est constitué que du premier signal (S1), le premier étage de synchronisation (Z1) établit pour l'intervalle de temps d'apparition du premier signal (S1) une valeur prédéterminée T et simultanément le deuxième étage de synchronisation (Z2) établit pour l'intervalle de temps d'apparition du deuxième signal (S2) la valeur zéro, et pour produire un signal de repérage d'un deuxième type (M2) constitué du premier signal (S1) et du deuxième signal (S2), le premier étage de synchronisation (Z1) établit pour l'intervalle de temps d'apparition du premier signal (S1) et, simultanément, le deuxième étage de synchronisation (Z2) établit pour l'intervalle de temps d'apparition du deuxième signal (S2) chaque fois la valeur T, et le dispositif de détection (33) comprend un premier étage de détection (38, 40) pour détecter un signal (S1') correspondant au premier signal (S1) extrait par lecture du support d'enregistrement (2) et un deuxième étage de détection (39, 41) pour détecter un signal (S2') correspondant au deuxième signal (S2) extrait par lecture du support d'enregistrement (2), les deux dispositifs délivrant, à l'apparition du signal correspondant concerné (S1′, S2′), respectivement, un signal de sortie (D1', D2), et un étage logique (42) suivant les deux étages de détection (38-41), qui produit et délivre, en fonction des signaux de sortie (D1, D2) des deux étages de détection, les signaux de détection (H1, H2) correspondant aux signaux de repérage (M1, M2) extraits par lecture du support d'enregistrement (2), caractérisé en ce que, pour produire au moins un signal de repérage d'un troisième type (M3) constitué du premier signal (S1) et du deuxième signal (S2), au moins un des deux étages de synchronisation (Z1, Z2) fixe l'intervalle de temps d'apparition, qui peut être fixé par ses soins, pour le signal concerné sur au moins une valeur différente de T, et le dispositif de détection (33) comprend, en plus des deux étages de détection (38-41) pour détecter les deux signaux (S1', S2') correspondant au premier signal (S1) et au deuxième signal (S2) et extraits par lecture du support d'enregistrement (2) pour au moins un de ces deux signaux correspondants, qui correspond à l'un des deux signaux, pour lequel, avec l'un des deux étages de synchronisation (Z1, Z2), au moins un intervalle de temps d'apparition différent de la valeur T peut être fixé, un étage de mesure du temps (Z3, Z4) pour mesurer l'intervalle de temps d'apparition d'au moins ce premier signal correspondant, qui achemine selon l'intervalle de temps d'apparition mesuré différentes valeurs de mesure de l'étage logique (42) pour produire les signaux de détection (H1-H3) correspondant aux signaux de repérage (M1-M3) extraits par lecture du support d'enregistrement (2).

2. Système selon la revendication 1, caractérisé en ce que, pour produire au moins un signal de repérage du troisième type (M3), le premier étage de synchronisation (Z1) fixe, pour l'intervalle de temps d'apparition du premier signal (S1), la valeur T et, simultanément, le deuxième étage de synchronisation (Z2) fixe pour l'intervalle de temps d'apparition du deuxième signal (S2), au moins une valeur différente de T.

3. Système selon la revendication 2, caractérisé en ce que, pour produire un signal de repérage du troisième type (M3), le premier étage de synchronisation (Z1) fixe, pour l'intervalle de temps d'apparition du premier signal (S1), la valeur T et, simultanément, le deuxième étage de synchronisation (Z2) fixe, pour l'intervalle de temps d'apparition du deuxième signal (S2), la valeur T/2.

4. Système selon l'une quelconque des revendications précédentes, caractérisé en ce que, pour la production d'au moins un signal de repérage du troisième type (M3), les deux étages de synchronisation (Z1, Z2) fixent le même instant de départ pour les intervalles de temps d'apparition des deux signaux (S1, S2).

5. Système selon l'une quelconque des revendications précédentes, caractérisé en ce que les deux étages de synchronisation (Z1, Z2) activent les deux étages générateurs (34-37) pour produire le premier signal (S1) et le deuxième signal (S2).

6. Système selon l'une quelconque des revendications précédentes avec un premier organe de commande (A) pour déclencher la production et l'enregistrement d'un signal de repérage du premier type (M1) et avec un deuxième organe de commande (B) pour déclencher la production et l'enregistrement d'un signal de repérage du deuxième type (M2), caractérisé en ce que la production et l'enregistrement d'au moins un signal de repérage du troisième type (M3) peuvent être déclenchés par l'actionnement successif d'un des deux organes de commande (A, B), au moins à deux reprises dans un intervalle de temps prédéterminé.

7. Système selon l'une quelconque des revendications précédentes, caractérisé en ce que le dispositif de détection (33) pour le signal (S1′) correspondant au premier signal (S1) extrait par lecture du support d'enregistrement (2) contient un premier étage de mesure du temps (Z3) pour mesurer l'intervalle de temps d'apparition de ce signal correspondant et pour le signal (S2′) correspondant au deuxième signal (S2) extrait par lecture du support d'enregistrement (2), un étage de mesure du temps (Z4) pour mesurer l'intervalle de temps d'apparition de ce signal correspondant, étages qui envoient tous deux les valeurs de mesure qu'ils ont déterminées à l'étage logique (42), et l'étage logique produit les signaux de détection (H1-H3) correspondant aux signaux de repérage (M1-M3) lus en fonction du rapport des valeurs de mesure qui lui sont acheminées.
